# EUROPEAN PATENT APPLICATION

(11) **EP 3 704 949 A1**
(43) Date of publication of application: **09.09.2020**
(21) Application number: 19425011.4
(22) Date of filing: 05.03.2019
(51) Int. Cl.: A23K 50/00, A23K 50/40

(54) **DRINK FOR PETS**

(71) Applicant: GEAPET s.a.s. di Negretto Gloria & C., 36026 Pojana Maggiore (VI) (IT)
(72) Inventor: Negretto, Gloria, 36026 Pojana Maggiore (VI) (IT); Negretto, Federico, 36026 Pojana Maggiore (VI) (IT)
(74) Representative: Zambardino, Umberto

(57) **Abstract**

The present invention relates to a drink for pets comprising water and at least one vegetable suitable for animal nutrition, in particular in the form of extract or derivative of said vegetable, said at least one vegetable being selected so as to give the pet receiving said drink a predetermined complementary vegetable nutritional contribution and/or at least one predetermined therapeutic benefit. Said drink advantageously allows the owners to combine the pleasure to share relax and amusement moments with their own pet taking at the same time care of its physical and psychological health.

## Description

### Field of Application

The present invention refers to the field of pet food.

In particular, the present invention relates to a drink for pets (also referred to as domestic animal), mainly but not exclusively dogs and cats, and a process for its preparation and packaging.

### Prior art

As it is known, the attention towards a healthy nutrition and lifestyle is more and more widespread in the modern society.

This tendency is more and more widespread in human beings but, more recently, involves also domestic animals or pets, to whose physical and psychological health more and more attention is paid.

In this context, an important role is represented by the drinks that besides being refreshing should also give a complementary nutritional contribution, appropriate to a healthy and balanced nutrition.

Regarding human nutrition, drinks containing various substances and additives have long been developed in order to give a balanced complementary nutritional contribution, for example of vitamins, mineral salts, and/or sugars and/or to give particular therapeutic properties which are beneficial for the human organism.

Vice versa, the development of healthy drinks for pets proves to be nowadays rather difficult and limited in particular due to the difficulties of providing preparations whose components used in the liquid formulation constituting the drink can actually be appreciated by the receiving animal and at the same time bring the receiving animal nutritional and/or therapeutic benefits.

The set of problems above are instead limited or absent in some of the current solid or semi-solid (damp) "healthy" food supplements and/or preparations intended for pet nutrition which therefore at present constitute the only concrete way with which the owners can take care of the health of the respective pets by nutrition.

However, in the modern society there is an increasing tendency by the owners to try to share as much as possible with their own pets the pleasant moments of their daily life, including the pleasure/benefit given by drinking a drink, so as to establish an ever stronger relationship of affective exchange with their own pet.

In this context, the need is thus felt to provide a drink suitable for pets capable of giving the receiving animal nutritional and/or therapeutic benefits similar to or of the same type of those achievable by human beings by means of corresponding drinks for human nutrition.

The main purpose of the present invention is therefore to provide a drink suitable for pets which meets the above need without having the drawbacks previously mentioned with relation to the prior art.

Further purpose of the present invention is to provide a drink for pets as above which is ready for use, i.e. which does not need dilution and/or other treatment before administration to the pet, so that it is comfortable and practical to use.

### Summary of the invention

Said purposes are achieved by a drink for pets comprising water and at least one vegetable suitable for animal nutrition, said at least one vegetable being selected so as to give the pet receiving said drink a predetermined complementary vegetable nutritional contribution and/or at least one predetermined therapeutic benefit.

Preferably, the at least one vegetable is in the form of an extract or derivative of the vegetable of interest, in particular a substantially water-soluble extract or derivative.

In an embodiment, the at least one vegetable extract is contained in the drink in an amount ranging from 0.1% and 10%, in particular from 0.1% and 6%, by weight based on the total weight of the drink.

Preferably, each vegetable extract is obtained by subjecting the selected vegetable to maceration followed by separation, for example by means of filtration, of a liquid fraction from the macerated product, said liquid fraction constituting said vegetable extract.

In an embodiment, the drink according to the invention comprises vegetable extracts of valerian, chamomile and passion-flower which give the receiving animal a calming and/or relaxing therapeutic benefit.

In an embodiment, the drink according to the invention comprises vegetable extracts of fennel seeds, ginger root and pineapple which give the receiving animal an anti-inflammatory and/or digestion-aid, therapeutic benefit.

In an embodiment, the drink according to the invention comprises vegetable extracts of ginseng, maca and spirulina, which give the receiving animal a restorative, energizing, anti-fatigue and/or antioxidant therapeutic benefit.

In an embodiment, the drink according to the invention comprises vegetable extracts of artichoke, cardus marianus and turmeric which give the receiving animal a detoxifying and/or diuretic therapeutic benefit.

In an embodiment, the drink according to the invention comprises vegetable extracts of celery, carrot and fennel which give the receiving animal a complementary vegetable nutritional contribution as well as at least one therapeutic benefit against water retention and anti-inflammatory.

In an embodiment, the drink according to the invention comprises vegetable extracts of maca, dill and dandelion which give the receiving animal a complementary vegetable nutritional contribution as well as at least one digestion-aid, anti-flatulence and diuretic therapeutic benefit.

In an embodiment, the drink according to the invention has a reduced sodium content, i.e. a sodium content preferably equal to or less than 0.05 mg/ 100 ml product (drink). It has been found that with an accurate combination of conveniently selected extracts of vegetables suitable for animal nutrition it is possible to create a refreshing drink suitable for administration to pets which gives them a healthy complementary nutritional contribution and/or similar therapeutic benefits or in any case of the same type of those achievable by human beings by means of respective healthy drinks for human nutrition. At the same time, the healthy drink has organoleptic characteristics, in particular aroma and/or taste, which are appreciated by pets, in particular dogs and cats.

In this way, it is therefore possible for the owners to share with their pets the nutritional and/or therapeutic benefits given by the ingestion of respective drinks especially during pleasant relax and amusement moments, at the same time paying attention to physical and psychological health of their own pet, for example dog, thereby reinforcing the affective relationship therewith.

The present invention further relates to a process for preparing a packaged drink for pets as described above. This process comprises the steps of:
- providing at least one vegetable suitable for animal nutrition preferably in the form of extract or derivative of said vegetable,
- adding said at least one vegetable, preferably in the form of extract or derivative of said vegetable, with water in predetermined proportions and mixing, thereby obtaining an aqueous mixture,
- putting a predetermined amount (dose) of said aqueous mixture in an open container,
- closing said container with a closure cap, thereby obtaining said packaged drink.

Preferably, the container used for packaging the drink is a flexible container such as a bag, a pouch and the like which can be closed again by means of a respective closure cap.

### Detailed description

In the present invention, the expression "vegetable suitable for animal nutrition" is meant to refer to any vegetable suitable for the nutrition of pets, especially dogs and cats, or in any case tolerated in so far as its administration, possibly in controlled amounts, entails positive (beneficial) effects, which are significant on the physical and/or psychological health of the receiving pet. It should in fact be noted that not all the vegetables which are adequate for human nutrition are also suitable for pet nutrition, since they can also be harmful for pet health. In general, the vegetables suitable for animal nutrition contemplated by the present invention are greens and fruits and preferably greens.

The expression "complementary nutritional contribution" or similar expressions is meant to refer to the contribution of nutrients, especially proteins, vitamins and mineral salts contained in vegetable components derived from the ingestion of the drink according to the invention by the pet. Since the amount of nutrients of vegetable origin brought by the ingestion of the drink according to the invention is relatively small, it is usually complementary to that deriving from the meals consumed by the pet during the day.

The expression "predetermined therapeutic benefit" or similar expressions is meant to refer to any beneficial effect or combination of beneficial effects on the physical and/or psychological health of the pet obtainable by way of ingestion of a drink according to the invention by the pet itself. Said beneficial effect or combination of beneficial effects substantially derives/derive from the type and/or amount of chosen vegetables and may be predetermined depending on the beneficial and/or therapeutic properties of the chosen vegetables.

In the present description and in the attached claims, unless otherwise stated, the percentages are by weight based on the total weight of the product (drink). Moreover, unless otherwise stated, all the numbers expressing amounts, percentages and so on, should be understood as modified in any case by the term "about" and all the ranges include any combination of the maxima and minima described and include any intermediate range between them, which may or may also not be herein specifically indicated.

In the present invention, the starting vegetables may be used already dried or fresh which may be processed directly after harvest or at a later time, after conservation in conditioned environments until usage, so as to obtain from them the edible parts of interest.

Such processing usually comprises different operations including a pruning (or peeling) step to remove the skin or the peel, followed by a step of washing the pruned vegetables and possible sanitation thereof for example with ozonized water.

Afterwards, according to the present invention, the vegetables are subjected, individually or in mixture, to a per se conventional processing in order to obtain derivatives or extracts, in particular substantially water-soluble derivatives or extracts.

In a preferred embodiment of the invention, said processing comprises a step of maceration of the vegetable followed by a step of separation of a liquid fraction from the macerated product, said liquid fraction constituting the vegetable extract.

Preferably the maceration is performed by submerging the edible parts of the vegetable or vegetables of interest, previously broken into small pieces and possibly dried, in a liquid (solvent) contained in a vessel. The liquid used for maceration may for example be water, alcohol, oil or mixtures thereof, for example an hydroalcoholic solvent (water/alcohol mixture in variable proportion). The maceration duration may be chosen depending on different factors such as in particular the type of vegetable or vegetables subjected to treatment and the maceration liquid used.

The product obtained from maceration is successively subjected to a step of separation of the liquid fraction which may be performed with per se conventional procedures, for example by means of centrifugation or filtration. The resulting liquid fraction separated constitutes a vegetable extract or derivative which is used to prepare the drink according to the invention.

In this regard, the vegetable extracts or derivatives obtained as indicated above are mixed with water in predetermined proportions using per se conventional mixers. The mixing is normally performed at room temperature and may be performed for a duration sufficient to obtain a substantially homogeneous and stable mixture (solution).

Preferably, each vegetable extract is added in an amount ranging from 0.5% and 10% by weight based on the total weight of the mixture. The effective amount may be easily determined by one of skill in the art depending on the specific needs such as for example the desired vegetable nutritional contribution, the chosen therapeutic benefits, the taste and aroma of the drink.

The drink according to the invention may also comprise further components (additives) such as for example vitamins, natural antioxidants, mineral salts, amino acids which are added to water along with the vegetable extracts or derivatives to form the above mixture.

It may be preferable that the added additives do not bring sugar in a significant way so that the drink has a reduced sugar content. Moreover, it is preferable that the added ingredients bring sodium in a reduced amount so that the drink has a sodium content preferably equal to or less than 0.05 mg/ 100 ml product.

In a preferred embodiment, the above mixture is obtained by mixing the chosen vegetable extracts or derivatives, water and the rest of ingredients in the desired proportions. In this way, the resulting drink according to the invention consists of water and of the chosen vegetables or vegetable extracts and of the other ingredients.

The mixture obtained as described above is put in predetermined amounts, for example with a per se conventional liquid doser, in respective open containers, which are then closed with respective closure caps, thereby obtaining the packaging of the drink according to the invention.

The containers used for the packaging may be of any type and, in particular can be flexible food container, such as small bags, pouches or the like which can be preferably closed again by means of respective closure caps.

It should be noted that the drink according to the invention packaged in this way is advantageously ready for use and does not need any dilutions nor treatments before administration to the receiving pet. The drink according to the invention can thus be directly poured in the desired or predetermined amount in a bowl dedicated for ingestion by the receiving pet. Moreover, since the package consists of the container and the reclosable closure cap, the potential residual drink amount left in the package can be re-used for consumption within a relatively long time period without substantial loss of its original characteristics, for example a period of 3-4 days.

In an embodiment, the drink according to the invention is obtained from a mixture comprising or consisting of water containing from 0.3% to 0.5% vegetable extract of valerian, from 0.2% to 0.6% chamomile extract and from 0.6% to 1% passion-flower extract.

Such a drink is particularly suitable for dogs of any race, size and age and gives the receiving animal, in particular, a calming and/or relaxing therapeutic benefit deriving from the relaxing properties of the vegetables of the extracts used.

In particular, glutamine contained in the roots of valerian (Valeriana officinalis) is responsible for the calming effect, while valepotriates and valerenic acid act on the central nervous system promoting smooth muscles relaxation.

Chamomile (Matricaria chamomilla) contains different active ingredients including alpha-bisabolol, coumarin and chamazulene, which give the plant decongestant, lenitive and sedative properties.

In the passion-flower (Passiflora incarnata), the active ingredients contained in the highest amount are flavonoids, glucosides and alkaloids and they are responsible for the calming and sedative properties which characterize this plant as the optimal phytotherapeutic agent to treat depressive, insomnia, nervous excitation, melancholy states.

Such a drink may be administered to a receiving dog at any moment of the day by for example pouring it in a bowl dedicated to it and the receiving dog may be let drink until satisfaction.

In another embodiment, the drink according to the invention is obtained from a mixture comprising or consisting of water containing from 1.5% to 2 % extract of fennel seeds, from 0.3% to 0.6% extract of ginger root and from 1.5% to 3% pineapple extract.

Such a drink is particularly suitable for dogs of any race, size and age. It quenches the thirst of the receiving animal and at the same time helps it digesting and better absorbing the nutrients ingested with the diet thanks to the therapeutic properties of the vegetable of the extracts used.

In fact, fennel seeds (Foeniculum vulgare) are very rich in antioxidants, vitamins, minerals (calcium) and fibers. Among antioxidants are included flavonoids such as quercetin and kaempferol, which prevents abdominal swelling and digestive problems and stimulate diuresis.

Ginger root (Zingiber officinale) contributes instead to stimulate intestinal movements thereby preventing constipation, it hinders nausea and vomiting and is a good liver preserver. Ginger is a natural anti-inflammatory and brings great relief to arthritic dogs.

Pineapple (Ananas comosus) contains bromelain, an enzyme which helps dog digestive system to metabolize proteins faster, it is therefore an effective digestive aid for our dog. It has been shown that including moderate amounts of this fruit in the diet of dogs with kidney problems can bring them some benefit.

Such a drink may be administered to a receiving dog at any moment, preferably after meals, to facilitate digestion. It may be poured directly into a bowl dedicated to the receiving dog which may be let drink until satisfaction.

In a further embodiment, the drink according to the invention is obtained from a mixture comprising or consisting of water containing from 0.1% to 0.5% ginseng extract, from 0.2% to 1% maca extract and from 2% to 6% spirulina extract.

Such a drink is particularly suitable for dogs which are very active or are a little out of sorts, and it is an excellent remedy to let the animal recover energy and quench its thirst immediately after running or walking in a healthy and balanced way.

It is suitable for dogs of any race, size and age and it is particularly recommended if they show to become out of sorts and to lose vitality due to an antibiotic therapy, to a vaccine, to season change or simply to old age, and this is due to the fact that the vegetables of the used extracts contain active ingredients which are restorative and energizing.

In particular, the root of ginseng (Panax ginseng) induces an overall improvement of the physical and mental performance. The active ingredients responsible for its antifatigue action are mainly ginsenosides which have also a strong antioxidant effect.

The roots of Peruvian maca (Lepidium Meyenii) have a high nutritional value and extraordinary qualities which were already known by Inca. Maca falls within the adaptogenic plants, i. e. plants which are capable of increasing the resistance of the organism and increasing energy, physical and mental strength with antistress and regenerating effects. Among the main phytochemical constituents there are different alkaloids.

Known since the ancient times, the alga spirulina (Arthrospira platensis) is a green-light blue microalga considered a complete food, since it contains proteins, vitamins, essential amino acids and minerals such as iron, calcium, magnesium, potassium and selenium. It has an excellent antioxidant power and an effect of preventing and delaying muscle fatigue during heavy physical exercise. It is a natural alternative to the multivitamin-mineral supplements and thanks to its high protein content and to the presence of essential amino acids can guarantee that the daily requirement is met also for dogs following a vegetarian or vegan diet.

Such a drink may be administered to a receiving dog at any moment of the day, in particular before, during or after physical activity or when the dog is a little out of sorts. The above drink may be poured directly into a bowl dedicated to the receiving dog which may be let drink until satisfaction.

In a further embodiment, the drink according to the invention is obtained from a mixture comprising or consisting of water containing from 0.2% to 0.8% artichoke extract, from 0.2% to 0.8% cardus marianus extract and from 0.3% to 0.6% turmeric extract.

Such a drink is particularly suitable for dogs of any race, size and age and may be a drink that a dog can drink after a particularly abundant meal or after pharmacological therapies which may have slowed down its natural hepatic and intestinal activities, this thanks to the properties of the vegetables of the extracts used.

In fact, artichoke (Cynara scolymus) improves digestion and is an excellent hepato-renal depurative. Some studies show that in the dog it is also useful for reducing cholesterol and triglycerides, thereby contributing to a better fitness. Moreover, artichoke has a diuretic, detoxifying and laxative action. The high antioxidants levels, including quercetin, cynarine and silymarin help treating constipation and hepatic dysfunction. In particular, cynarine protects liver cells against oxidative stress.

Cardus marianus (Silybum marianum) has showed efficacy in protecting liver against toxins and is a strong antioxidant and anti-inflammatory. In the dog it is successfully used also in treating diabetes and inflammatory bowel diseases (IBD).

It is thought that the beneficial effects of turmeric (Curcuma longa) are mainly due to curcumin, a yellow-orange volatile oil and a strong antioxidant which seems reducing the symptoms related to rheumatoid arthritis in the dog. Curcumin also stimulates bile production which is necessary to digest fat in the liver.

Such a drink may be administered to a receiving dog at any moment, preferably after meals, to facilitate digestion. It may be poured directly into a bowl dedicated to the receiving dog which may be let drink until satisfaction.

In a further embodiment, the drink according to the invention is obtained from a mixture comprising or consisting of water containing from 0.1% to 0.5% celery extract, from 0.3% to 0.8% carrot extract and from 1.5% to 2% fennel extract.

Such a drink is substantially a ready for use vegetable broth particularly suitable for dogs of any race, size and age which can be used to dampen the dry food and thereby make the mastication easier for adult dogs and, in particular, for puppies. It may also be administered as a drink or as complementary food for a light meal, it may in fact be used to soak cereals and/or greens. It should be noted that the above drink, containing natural vegetable extracts of celery, carrot and fennel, advantageously has an aroma and a taste which are similar to those of the vegetable broth for human nutrition. The above drink also brings therapeutic benefits to the receiving dogs thanks to the properties of the vegetables of the extracts used.

In particular, celery (Apium graveolens) contains many substances which make it an excellent natural remedy against water retention and it plays an effective action in treating rheumatic affections and inflammatory arthritis.

Carrot (Daucus carota) is important for the protection of skin and the health of fur. It further prevents ocular irritations, since it is a (beta)carotene and vitamin A source.

Fennel (Foeniculum vulgare) instead, thanks to its antioxidants, prevents abdominal swelling and facilitates digestion.

In a further embodiment, the drink according to the invention is obtained from a mixture comprising or consisting of water containing from 0.2% to 1% maca extract, from 1.5% to 2% dill extract and from 1% to 1.5% dandelion extract.

Such a drink is substantially a ready for use vegetable broth particularly suitable for dogs of any race, size and age and gives therapeutic, digestion-supporting, anti-flatulence and diuretic, benefits thanks to the energetic and digestive properties of the vegetables of the extracts used.

In fact, the roots of Peruvian maca (Lepidium Meyenii) have a high nutritional value and extraordinary qualities which were already known by Inca. Maca falls within the adaptogenic plants, i. e. plants which are capable of increasing the resistance of the organism and increasing energy, physical and mental strength with antistress and regenerating effects. Among the main phytochemical constituents there are different alkaloids.

Dill (Anethum graveolens) stimulates appetite, digestion and hinders flatulence. It promotes the digestive process and alleviate intestinal swelling, it improves extraction of nutritional substances from ingested food and their uptake by the gastrointestinal tract, thus limiting the losses through urine and feces. It also refreshes breath.

Dandelion (Taraxacum officinale) is rich in vitamin A, C, D, E, K, and group B vitamins, as well as potassium, calcium, iron, thiamine, choline, lecithin and riboflavin. It is an effective diuretic and thanks to the high potassium content it provides the organism with the essential minerals which are expelled with urine. Dandelion root increases bile production by more than 50% and promotes bile flow to gall-bladder.

Such a drink may be administered to a receiving dog at any moment of the day. It may be poured directly into a bowl dedicated to the receiving dog which may be let drink until satisfaction.

In the light of the above, the drink for pets according to the invention achieves the predetermined purposes and gives several advantages.

In fact, the drink according to the invention is totally healthy for pets in that it essentially contains natural derivatives of vegetables suitable for animal nutrition which bring the same benefits, both nutritional and therapeutic.

Moreover, the drink according to the invention allows to quench the thirst of receiving pets in a healthy and balanced way.

In addition, the drink according to the invention advantageously allows the owners to combine the pleasure to share relax and amusement moments with their own pet taking at the same time care of its physical and psychological health.

Another advantage, not less important than the latter, is that the drink according to the invention is ready for use thereby being comfortable and practical to use.

One of skill in the art may make numerous modifications and changes to the drink and process for the preparation thereof, all however coming within the scope of protection of the attached claims.

## Claims

1. Drink for pets comprising water and at least one vegetable suitable for animal nutrition, said at least one vegetable being selected so as to give the pet receiving said drink a predetermined complementary vegetable nutritional contribution and/or at least one predetermined therapeutic benefit.

2. Drink according to claim 1, wherein said at least one vegetable is in the form of extract or derivative, in particular a substantially water-soluble extract or derivative.

3. Drink according to claim 2, wherein the at least one vegetable extract is contained in an amount ranging from 0.1% and 10% by weight based on the total weight of the drink.

4. Drink according to claim 3, wherein the at least one vegetable extract is contained in an amount ranging from 0.1% and 6% by weight based on the total weight of the drink.

5. Drink according to any one of the preceding claims, wherein each vegetable extract is obtained by subjecting the selected vegetable to maceration followed by separation of a liquid fraction from the macerated product, said liquid fraction constituting said vegetable extract.

6. Drink according to any one of the preceding claims comprising one of the following combinations of vegetable extracts:
- vegetable extracts of valerian, chamomile and passion-flower which give the receiving animal a calming and/or relaxing therapeutic benefit;
- vegetable extracts of fennel seeds, ginger root and pineapple which give the receiving animal an anti-inflammatory and/or digestion-aid therapeutic benefit;
- vegetable extracts of ginseng, maca and spirulina, which give the receiving animal a restorative, energizing, anti-fatigue and/or antioxidant, therapeutic benefit;
- vegetable extracts of artichoke, cardus marianus and turmeric which give the receiving animal a detoxifying and/or diuretic therapeutic benefit;
- vegetable extracts of celery, carrot and fennel which give the receiving animal a complementary vegetable nutritional contribution as well as a therapeutic benefit against water retention and anti-inflammatory; or
- vegetable extracts of maca, dill and dandelion which give the receiving animal a complementary vegetable nutritional contribution as well as a digestion-aid, anti-flatulence and diuretic therapeutic benefit.

7. Drink according to any one of the preceding claims, further containing one or more additives selected from the group consisting of vitamins, natural antioxidants, mineral salts, amino acids.

8. Drink according to any one of the preceding claims, wherein said drink has a sodium content equal to or less than 0.05 mg/ 100 ml drink.

9. Process for preparing a packaged drink for pets, comprising the steps of:
- providing at least one vegetable suitable for animal nutrition preferably in the form of extract or derivative of said vegetable,
- adding said at least one vegetable, preferably in the form of extract or derivative of said vegetable with water in predetermined proportions and mixing, thereby obtaining an aqueous mixture,
- putting a predetermined amount (dose) of said aqueous mixture in an open container,
- closing said container with a closure cap, thereby obtaining said packaged drink.

10. Process according to claim 9, wherein said container is a flexible container such as a bag or pouch which can be closed again by means of a respective closure cap.
